# EUROPEAN PATENT APPLICATION

(11) **EP 4 566 698 A1**
(43) Date of publication of application: **11.06.2025**
(21) Application number: 23850123.3
(22) Date of filing: 02.08.2023
(51) Int. Cl.: B01D 63/06, B01D 63/00

(54) **SEPARATION MEMBRANE MODULE**

(30) Priority: 02.08.2022 JP 2022123562
(71) Applicant: NGK Insulators, Ltd., Nagoya-shi, Aichi 467-8530 (JP)
(72) Inventor: IIDA, Kazuki, Nagoya-shi, Aichi 467-8530 (JP); SHIBAGAKI, Yukinari, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Müller-Boré & Partner Patentanwälte PartG mbB
(86) International application number: PCT/JP2023/028296
(87) International publication number: WO 2024/029569

(57) **Abstract**

A separation membrane module includes a columnar reactor (10), an annular first flange (30) surrounding a first end portion (10a) of the reactor (10), and a first intermediate portion (50) arranged between a first end surface (F2) of the reactor 10 and a housing (20).

## Description

### TECHNICAL FIELD

The present invention relates to a separation membrane module.

### BACKGROUND ART

Separation membrane modules including a housing and a columnar membrane structure housed in the housing are conventionally known. Examples of the membrane structure include a separation filter (see, for example, Patent Literature 1) configured to separate a predetermined component from a fluid mixture with use of a separation membrane, and a reactor (see, for example, Patent Literature 2) configured to separate a product generated through a conversion reaction for converting a source gas into a liquid fuel with use of a separation membrane.

### CITATION LIST

### Patent Literature

Patent Literature 1: WO 2018/180095
Patent Literature 2: JP 2018-008940A

### SUMMARY

### TECHNICAL PROBLEM

When the membrane structure comes into direct contact with the housing, the membrane structure is damaged, and accordingly, it is desirable to adopt a configuration that avoids direct contact between the membrane structure and the housing.

An object of the present invention is to provide a separation membrane module that can suppress damage to the membrane structure.

### SOLUTION TO PROBLEM

A separation membrane module according to a first aspect includes a tubular housing, a columnar membrane structure housed in the housing, an annular first flange surrounding a first end portion of the membrane structure, and a first intermediate portion arranged between a first end surface of the membrane structure and the housing.

A separation membrane module according to a second aspect is the separation membrane module according to the first aspect, further including a first joining material interposed between the first flange and the membrane structure and between the first intermediate portion and the membrane structure.

In a separation membrane module according to a third aspect, which is the separation membrane module according to the first or the second aspect, the first intermediate portion and the first flange are formed as a single piece.

In a separation membrane module according to a fourth aspect, which is the separation membrane module according to any of the first through third aspects, the first intermediate portion and the first flange are each constituted by a ceramic material.

A separation membrane module according to a fifth aspect is the separation membrane module according to any of the first through fourth aspects, further including an annular second flange surrounding a second end portion of the membrane structure, and a second intermediate portion arranged between a second end surface of the membrane structure and the housing.

A separation membrane module according to a sixth aspect is the separation membrane module according to the fifth aspect, further including a second joining material interposed between the second flange and the membrane structure and between the second intermediate portion and the membrane structure.

In a separation membrane module according to a seventh aspect, which is the separation membrane module according to the fifth or the sixth aspect, the second intermediate portion and the second flange are formed as a single piece.

In a separation membrane module according to an eighth aspect, which is the separation membrane module according to any of the fifth through seventh aspects, the second intermediate portion and the second flange are each constituted by a ceramic material.

In a separation membrane module according to a ninth aspect, which is the separation membrane module according to any of the first through eighth aspects, the membrane structure is a reactor.

In a separation membrane module according to a tenth aspect, which is the separation membrane module according to any of the first through eighth aspects, the membrane structure is a separation filter.

### ADVANTAGEOUS EFFECTS

According to the present invention, it is possible to provide a separation membrane module that can suppress damage to the membrane structure.

### BRIEF DESCRIPTION OF DRAWINGS

FIG. 1 is a cross-sectional view of a separation membrane module according to an embodiment.
FIG. 2 is a partial enlarged view of FIG. 1.
FIG. 3 is a partial enlarged view of FIG. 1.
FIG. 4 is a cross-sectional view of a separation membrane module according to Variation 2.
FIG. 5 is a cross-sectional view taken along a line A-A shown in FIG. 4.
FIG. 6 is a cross-sectional view taken along a line B-B shown in FIG. 4.
FIG. 7 is a cross-sectional view of a separation membrane module according to Variation 4.
FIG. 8 is a cross-sectional view of a separation membrane module according to Variation 4.
FIG. 9 is a cross-sectional view of a separation membrane module according to Variation 7.
FIG. 10 is a cross-sectional view of a separation membrane module according to Variation 7.
FIG. 11 is a cross-sectional view of a separation membrane module according to Variation 10.
FIG. 12 is a cross-sectional view of a separation membrane module according to Variation 10.
FIG. 13 is a cross-sectional view of a separation membrane module according to Variation 11.
FIG. 14 is a cross-sectional view of a separation membrane module according to Variation 11.
FIG. 15 is a cross-sectional view of a separation membrane module according to Variation 11.
FIG. 16 is a cross-sectional view of a separation membrane module according to Variation 12.
FIG. 17 is a cross-sectional view of a separation membrane module according to Variation 12.
FIG. 18 is a cross-sectional view of a separation membrane module according to Variation 13.
FIG. 19 is a cross-sectional view of a separation membrane module according to Variation 13.
FIG. 20 is a cross-sectional view of a separation membrane module according to Variation 13.

### DESCRIPTION OF EMBODIMENTS

### (Separation membrane module 1)

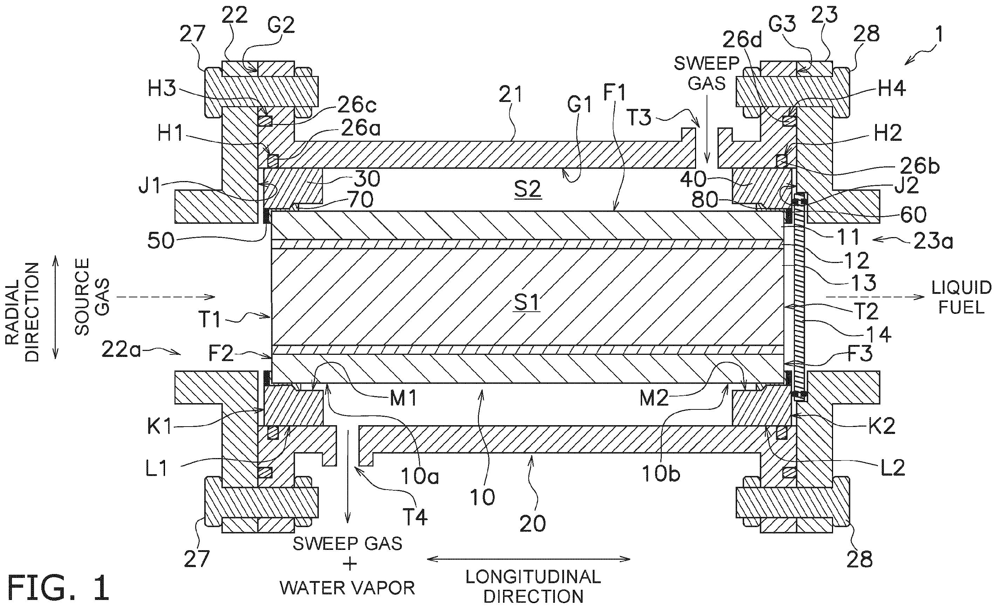

The following describes a separation membrane module 1 according to an embodiment. FIG. 1 is a schematic cross-sectional view showing a configuration of the separation membrane module 1.

As shown in FIG. 1, the separation membrane module 1 includes a reactor 10, a housing 20, a first flange 30, a second flange 40, a first intermediate portion 50, a second intermediate portion 60, a first joining material 70, and a second joining material 80. The reactor 10 is an example of a "membrane structure" according to the present invention.

### [Reactor 10]

The reactor 10 is housed in the housing 20. The reactor 10 is formed into a columnar shape extending in a longitudinal direction. The external shape of the reactor 10 is not particularly limited, and may be a round column shape, an elliptical column shape, or a polygonal column shape, for example.

The reactor 10 is a so-called membrane reactor for converting a source gas into a liquid fuel. The source gas contains at least hydrogen and carbon dioxide. The source gas may also contain carbon monoxide. The source gas may be a so-called synthesis gas (syngas). The liquid fuel is a fuel that is in a liquid state at normal temperature and normal pressure or a fuel that can be liquefied at normal temperature in a pressurized state. Examples of fuels that are in the liquid state at normal temperature and pressure include methanol, ethanol, a liquid fuel represented by CₙH₂₍ₘ₋₂ₙ₎ (m is an integer smaller than 90, and n is an integer smaller than 30), and a mixture of these. Examples of fuels that can be liquefied at normal temperature in a pressurized state include propane, butane, and a mixture of these.

For example, a reaction formula (1) for the synthesis of methanol through catalytic hydrogenation of a source gas containing hydrogen and carbon dioxide in the presence of a catalyst is expressed as follows.

CO₂+3H₂ ⇔ CH₃OH+H₂O (1)

The above reaction is an equilibrium reaction, and the reactor 10 can shift the reaction equilibrium to the product side by separating water vapor, which is a product of the conversion reaction. In order to increase the conversion efficiency and the reaction rate, the conversion reaction is preferably carried out at a high temperature and a high pressure (e.g., 180°C or higher and 2 MPa or higher). The liquid fuel is in a gaseous state when it is synthesized, and remains in the gaseous state at least until the liquid fuel flows out of the reactor 10. It is preferable that the reactor 10 has heat resistance and pressure resistance appropriate for synthesis conditions of the desired liquid fuel.

The reactor 10 according to the present embodiment is a so-called tubular type. As shown in FIG. 1, the reactor 10 includes an outer circumferential surface F1, a first end surface F2, and a second end surface F3. The outer circumferential surface F1 is a side surface of the columnar reactor 10. The outer circumferential surface F1 is continuous with the first end surface F2 and the second end surface F3. The first end surface F2 is an end surface of the columnar reactor 10. A first opening T1 is formed in the first end surface F2. The source gas flows into the reactor 10 via the first opening T1. The second end surface F3 is another end surface of the columnar reactor 10. A second opening T2 is formed in the second end surface F3. The liquid fuel flows out of the reactor 10 via the second opening T2.

The reactor 10 includes a first end portion 10a and a second end portion 10b. The first end portion 10a is an end portion of the reactor 10 in the longitudinal direction. The first end portion 10a includes the first end surface F2 described above. The second end portion 10b is another end portion of the reactor 10 in the longitudinal direction. The second end portion 10b includes the second end surface F3 described above.

Here, the reactor 10 is constituted by a porous support 11, a separation membrane 12, a catalyst 13, and a catalyst stopper 14.

The porous support 11 is formed into a tubular shape extending in the longitudinal direction. The porous support 11 is constituted by a porous material. A ceramic material, a metallic material, a resin material, a composite member of these, or the like can be used as the porous material, and a ceramic material is particularly favorable. Alumina (Al₂O₃), titania (TiO₂), mullite (Al₂O₃·SiO₂), potsherd, cordierite (Mg₂Al₄Si₅O₁₈), a composite material including two or more of these, or the like can be used as an aggregate for the ceramic material. Alumina is favorable in view of availability, clay stability, and corrosion resistance. At least one of titania, mullite, easily sinterable alumina, silica, glass frit, a clay mineral, and easily sinterable cordierite can be used as an inorganic binder for the ceramic material. However, the ceramic material need not necessarily contain an inorganic binder.

The average pore diameter of the porous support 11 can be set to 5 µm or more and 25 µm or less. The average pore diameter of the porous support 11 can be measured using a mercury intrusion method. The porosity of the porous support 11 can be set to 25% or more and 50% or less. The average particle diameter of the porous material can be set to 1 µm or more and 100 µm or less. The average particle diameter refers to the arithmetic mean of the maximum diameters of 30 particles to be measured (randomly selected), as measured by cross-sectional microstructural observation using a scanning electron microscope (SEM).

The separation membrane 12 is supported by the porous support 11. The separation membrane 12 is formed into a tubular shape extending in the longitudinal direction. The inner side of the separation membrane 12 is a non-permeate-side space S1 to which the source gas is supplied. The non-permeate-side space S1 is a space between the first opening T1 and the second opening T2. In the present embodiment, the separation membrane 12 is arranged on the inner surface of the porous support 11, but the separation membrane 12 may be arranged on the outer surface of the porous support 11.

The separation membrane 12 allows permeation of water vapor, which is a product generated through the conversion reaction for converting the source gas into the liquid fuel. Thus, the reaction equilibrium of the above formula (1) can be shifted to the product side by utilizing an equilibrium shift effect.

It is preferable that the separation membrane 12 has a water vapor permeability coefficient of 100 nmol/(s·Pa·m²) or more. The water vapor permeability coefficient can be obtained using a known method (see Ind. Eng. Chem. Res., 40, 163-175 (2001)).

It is preferable that the separation membrane 12 has a separation coefficient of 100 or more. The larger the separation coefficient is, the separation membrane 12 allows permeation of more water vapor and less components (hydrogen, carbon dioxide, the liquid fuel, etc.) other than water vapor. The separation coefficient can be obtained using a known method (see FIG. 1 in "Separation and Purification Technology 239 (2020) 116533").

The separation membrane 12 may be an inorganic membrane. Inorganic membranes have heat resistance, pressure resistance, and water vapor resistance and thus are preferable. Examples of inorganic membranes include zeolite membranes, silica membranes, alumina membranes, and composite membranes thereof. In particular, LTA-type zeolite membranes in which a mole ratio (Si/Al) between silicon element (Si) and aluminum element (Al) is 1.0 or more and 3.0 or less have excellent water vapor permeability and thus are favorable.

The catalyst 13 is arranged on the inner side of the separation membrane 12, i.e., in the non-permeate-side space S1. It is preferable that the non-permeate-side space S1 is filled with the catalyst 13, but the catalyst 13 may also be arranged in such a manner as to form a layer or islands on the surface of the separation membrane 12. The catalyst 13 promotes the conversion reaction for converting the source gas into the liquid fuel shown in the above formula (1).

A known catalyst suitable for the conversion reaction for converting the source gas into the liquid fuel can be used as the catalyst 13. Examples of the catalyst 13 include metal catalysts (copper, palladium, etc.), oxide catalysts (zinc oxide, zirconia, gallium oxide, etc.), and composites of these (copper-zinc oxide, copper-zinc oxide-alumina, copper-zinc oxide-chromium oxide-alumina, copper-cobalt-titania, and these catalysts modified with palladium, etc.).

The catalyst stopper 14 is arranged in such a manner as to cover the second opening T2 formed in the second end surface F3. The catalyst stopper 14 prevents the catalyst 13 from leaking from the second opening T2. The catalyst stopper 14 is configured so as not to prevent the liquid fuel from flowing out, while preventing leakage of the catalyst 13. A net-like member, a plate having a hole, or the like can be used as the catalyst stopper 14. In the present embodiment, the catalyst stopper 14 is fixed by being sandwiched between the housing 20 and the second flange 40, but the catalyst stopper 14 may also be attached to the second end surface F3 of the reactor 10.

However, in a case where leakage of the catalyst 13 is unlikely to occur (for example, in the case where the catalyst 13 is arranged in such a manner as to form a layer or islands on the surface of the separation membrane 12), the reactor 10 need not be provided with the catalyst stopper 14.

In the reactor 10, the source gas supplied to the non-permeate-side space S1 is converted into the liquid fuel due to the action of the catalyst 13, and water vapor, which is a product generated through the conversion reaction, is separated by passing through the separation membrane 12 and the porous support 11 into a permeate-side space S2, which will be described later.

### [Housing 20]

The housing 20 is formed into a tubular shape as a whole. The housing 20 accommodates the reactor 10. The housing 20 has a structure that can endure the conversion reaction carried out at a high temperature and a high pressure (e.g., 180°C or higher and 2 MPa or higher). In a case where the source gas and/or sweep gas contains hydrogen, it is preferable that the housing 20 is constituted by a material that is resistant to hydrogen embrittlement. The housing 20 can be constituted mainly by a metallic material (stainless steel or the like).

As shown in FIG. 1, the housing 20 is constituted by a tube main body 21, a first end plate 22, and a second end plate 23.

The tube main body 21 is formed into a tubular shape extending in the longitudinal direction. Both end portions of the tube main body 21 are formed like flanges by increasing the diameter.

The tube main body 21 has an inner circumferential surface G1, a first end surface G2, a second end surface G3, a sweep gas inlet T3, and a sweep gas outlet T4.

The inner circumferential surface G1 faces the outer circumferential surface F1 of the reactor 10 and is spaced apart from the outer circumferential surface F1. The space between the inner circumferential surface G1 and the outer circumferential surface F1 is the permeate-side space S2 for collecting water vapor, which is a product generated through the conversion reaction.

An annular first recess H1 is formed at an end of the inner circumferential surface G1. An annular first elastic member 26a is arranged in the first recess H1. The first elastic member 26a may be an O-ring made of expanded graphite or rubber, for example. The first elastic member 26a is in intimate contact with the first flange 30, which will be described later. Thus, a seal is formed between the tube main body 21 and the first flange 30.

An annular second recess H2 is formed at another end of the inner circumferential surface G1. An annular second elastic member 26b is arranged in the second recess H2. The second elastic member 26b may be an O-ring made of expanded graphite or rubber, for example. The second elastic member 26b is in intimate contact with the second flange 40, which will be described later. Thus, a seal is formed between the tube main body 21 and the second flange 40.

An annular first recess H3 is formed in the first end surface G2. A third elastic member 26c is arranged in the first recess H3. The third elastic member 26c may be an O-ring made of expanded graphite or rubber, for example. The third elastic member 26c is in intimate contact with the first end plate 22. Thus, a seal is formed between the tube main body 21 and the first end plate 22.

An annular second recess H4 is formed in the second end surface G3. A fourth elastic member 26d is arranged in the second recess H4. The fourth elastic member 26d may be an O-ring made of expanded graphite or rubber, for example. The fourth elastic member 26d is in intimate contact with the second end plate 23. Thus, a seal is formed between the tube main body 21 and the second end plate 23.

Each of the sweep gas inlet T3 and the sweep gas outlet T4 is continuous with the permeate-side space S2. Sweep gas is supplied via the sweep gas inlet T3 to the permeate-side space S2. In the permeate-side space S2, the sweep gas takes in water vapor and absorbs reaction heat generated through the conversion reaction. The sweep gas is discharged from the sweep gas outlet T4 together with water vapor. Hydrogen and/or carbon dioxide can be used as the sweep gas. Alternatively, inert gas (e.g., nitrogen), air, or the like may be used as the sweep gas. In the present embodiment, the sweep gas inlet T3 and the sweep gas outlet T4 are diagonally opposite to each other in a cross-sectional view, but the positions of the sweep gas inlet T3 and the sweep gas outlet T4 can be suitably changed.

The first end plate 22 is an annular plate member. The first end plate 22 has an inlet opening 22a through which the source gas flows in. The source gas is supplied via the inlet opening 22a to the non-permeate-side space S1 of the reactor 10.

A center portion of the first end plate 22 is formed like a flange by increasing the diameter. The first end plate 22 has a first facing surface J1. The first facing surface J1 faces the first end surface F2 of the reactor 10 and an end surface K1 of the first flange 30, which will be described later. In the present embodiment, the first facing surface J1 is spaced apart from the first end surface F2 of the reactor 10 and the end surface K1 of the first flange 30. The first facing surface J1 abuts against the first end surface G2 of the tube main body 21.

The first end plate 22 is connected to the tube main body 21 with use of a plurality of fixing members 27. The fixing members 27 are constituted by bolts and nuts, for example. The first end plate 22 is in intimate contact with the third elastic member 26c.

The second end plate 23 is an annular plate member. The second end plate 23 has an outlet opening 23a through which the liquid fuel flows out. The liquid fuel is discharged from the non-permeate-side space S1 of the reactor 10 to the outside via the outlet opening 23a.

A center portion of the second end plate 23 is formed like a flange by increasing the diameter. The second end plate 23 has a second facing surface J2. The second facing surface J2 faces the second end surface F3 of the reactor 10 and an end surface K2 of the second flange 40, which will be described later. In the present embodiment, the second facing surface J2 is spaced apart from the second end surface F3 of the reactor 10 and the end surface K2 of the second flange 40. The second facing surface J2 abuts against the second end surface G3 of the tube main body 21.

The second end plate 23 is connected to the tube main body 21 with use of a plurality of fixing members 28. The fixing members 28 are constituted by bolts and nuts, for example. The second end plate 23 is in intimate contact with the fourth elastic member 26d.

### [First flange 30]

The first flange 30 is attached to the reactor 10. The first flange 30 is joined to the reactor 10 by the first joining material 70. The first flange 30 serves as a spacer for forming the permeate-side space S2 between the reactor 10 and the tube main body 21. The first flange 30 is formed into an annular shape. The first flange 30 surrounds the first end portion 10a of the reactor 10. The first flange 30 is fitted into an end portion of the tube main body 21. The first flange 30 supports the first end portion 10a of the reactor 10 at a position spaced apart from the tube main body 21. Thus, the permeate-side space S2 is formed between the reactor 10 and the tube main body 21.

The first flange 30 has the end surface K1, an outer circumferential surface L1, and an inner circumferential surface M1. The end surface K1 is an outer surface of the first flange 30 in the longitudinal direction. The end surface K1 faces the first facing surface J1 of the first end plate 22. At least a portion of the end surface K1 may abut against the first facing surface J1. In the present embodiment, the end surface K1 is a planar surface. The outer circumferential surface L1 is a radially outer surface of the first flange 30. The outer circumferential surface L1 faces the inner circumferential surface G1 of the tube main body 21 and is in intimate contact with the first elastic member 26a. The outer circumferential surface L1 may abut against the inner circumferential surface G1. The inner circumferential surface M1 is on the side opposite to the outer circumferential surface L1. The inner circumferential surface M1 faces the outer circumferential surface F1 of the reactor 10 via the first joining material 70. The inner circumferential surface M1 may abut against the first intermediate portion 50, which will be described later.

The first flange 30 is constituted by a dense ceramic material. Examples of the ceramic material include alumina, zirconia, silicon carbide, aluminum nitride, cordierite, and a composite material including two or more of these. The first flange 30 needs to be air-tight and liquid-tight. Accordingly, the porosity of the first flange 30 is preferably 10.0% or less, and more preferably 5.0% or less.

### [Second flange 40]

The second flange 40 is attached to the reactor 10. The second flange 40 is joined to the reactor 10 by the second joining material 80. The second flange 40 is arranged on the side opposite to the first flange 30. The second flange 40 serves as a spacer for forming the permeate-side space S2 between the reactor 10 and the tube main body 21. The second flange 40 is formed into an annular shape. The second flange 40 surrounds the second end portion 10b of the reactor 10. The second flange 40 is fitted into another end portion of the tube main body 21. The second flange 40 supports the second end portion 10b of the reactor 10 at a position spaced apart from the tube main body 21.

The second flange 40 has the end surface K2, an outer circumferential surface L2, and an inner circumferential surface M2. The end surface K2 is an outer surface of the second flange 40 in the longitudinal direction. The end surface K2 faces the second facing surface J2 of the second end plate 23. At least a portion of the end surface K2 may abut against the second facing surface J2. In the present embodiment, the end surface K2 is a planar surface. The outer circumferential surface L2 is a radially outer surface of the second flange 40. The outer circumferential surface L2 faces the inner circumferential surface G1 of the tube main body 21 and is in intimate contact with the second elastic member 26b. The outer circumferential surface L2 may abut against the inner circumferential surface G1. The inner circumferential surface M2 is on the side opposite to the outer circumferential surface L2. The inner circumferential surface M2 faces the outer circumferential surface F1 of the reactor 10 via the second joining material 80. The inner circumferential surface M2 may abut against the second intermediate portion 60, which will be described later.

The second flange 40 is constituted by a dense ceramic material. Examples of the ceramic material include alumina, zirconia, silicon carbide, aluminum nitride, cordierite, and a composite material including two or more of these. The second flange 40 needs to be air-tight and liquid-tight. Accordingly, the porosity of the second flange 40 is preferably 10.0% or less, and more preferably 5.0% or less.

### [First intermediate portion 50]

The first intermediate portion 50 is an annular thin plate member. The first intermediate portion 50 is arranged between the reactor 10 and the housing 20. Specifically, the first intermediate portion 50 is arranged between the first end surface F2 of the reactor 10 and the first facing surface J1 of the first end plate 22. It is possible to keep the reactor 10 from coming into direct contact with the first end plate 22 by interposing the first intermediate portion 50 between the reactor 10 and the housing 20 as described above. Therefore, the reactor 10 can be kept from being damaged (chipped, cracked, etc.).

As shown in FIG. 1, it is preferable that the first intermediate portion 50 is joined to the reactor 10 by the first joining material 70. In this case, the first intermediate portion 50 and the reactor 10 can be substantially formed into a single piece, and therefore, damage to the reactor 10 can be further suppressed.

The first intermediate portion 50 can be constituted by a ceramic material, a resin material, or a metallic material. The above-described ceramic material of the first flange 30 can be used as the ceramic material. It is preferable that the first intermediate portion 50 is harder than the porous support 11 of the reactor 10. In this case, the reactor 10 can be protected by the first intermediate portion 50 more reliably, and accordingly, damage to the reactor 10 can be further suppressed.

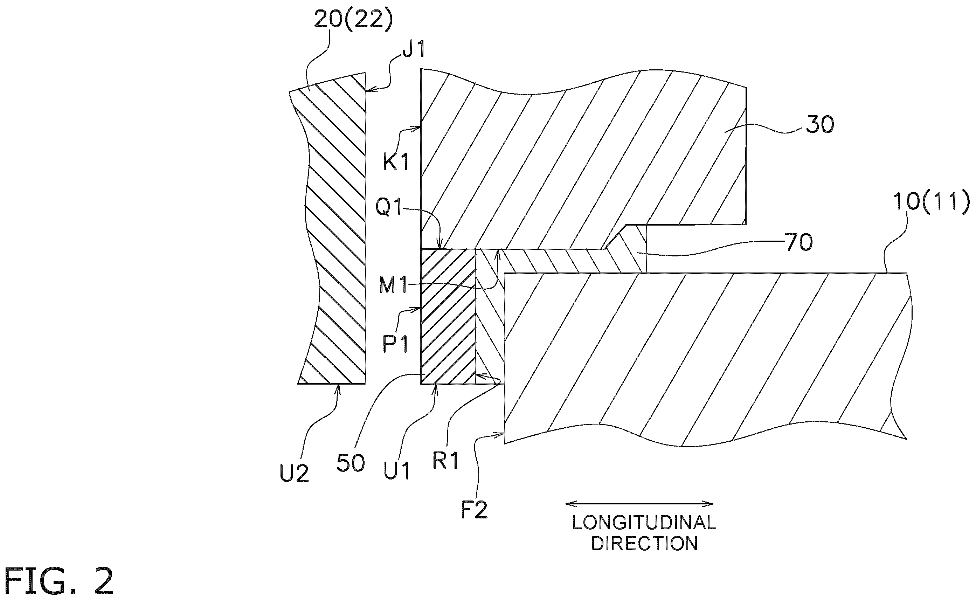

Here, FIG. 2 is a partial enlarged view of FIG. 1. As shown in FIG. 2, the first intermediate portion 50 has a facing surface P1, an abutting surface Q1, a joined surface R1, and an inner circumferential surface U1.

The facing surface P1 faces the housing 20. The facing surface P1 may abut against the facing surface J1 of the first end plate 22. In the present embodiment, the facing surface P1 is flush with the end surface K1 of the first flange 30, but a step may be formed between the facing surface P1 and the end surface K1. The abutting surface Q1 abuts against the inner circumferential surface M1 of the first flange 30. The joined surface R1 is joined to the first joining material 70. In the present embodiment, the inner circumferential surface U1 is flush with the inner circumferential surface U2 of the first end plate 22, but the inner circumferential surface U1 does not necessarily have to be flush with the inner circumferential surface U2. In the present embodiment, the facing surface P1, the abutting surface Q1, and the joined surface R1 are planar surfaces, but at least one of these may be entirely or partially curved or bent.

### [Second intermediate portion 60]

The second intermediate portion 60 is an annular thin plate member. The second intermediate portion 60 is arranged between the reactor 10 and the housing 20. Specifically, the second intermediate portion 60 is arranged between the second end surface F3 of the reactor 10 and the second facing surface J2 of the second end plate 23. It is possible to keep the reactor 10 from coming into direct contact with the housing 20 by interposing the second intermediate portion 60 between the reactor 10 and the second end plate 23 as described above. Therefore, the reactor 10 can be kept from being damaged (chipped, cracked, etc.).

As shown in FIG. 1, it is preferable that the second intermediate portion 60 is joined to the reactor 10 by the second joining material 80. In this case, the second intermediate portion 60 and the reactor 10 can be substantially formed into a single piece, and therefore, damage to the reactor 10 can be further suppressed.

The second intermediate portion 60 can be constituted by a ceramic material, a resin material, or a metallic material. The above-described ceramic material of the second flange 40 can be used as the ceramic material. It is preferable that the second intermediate portion 60 is harder than the porous support 11 of the reactor 10. In this case, the reactor 10 can be protected by the second intermediate portion 60 more reliably, and accordingly, damage to the reactor 10 can be further suppressed.

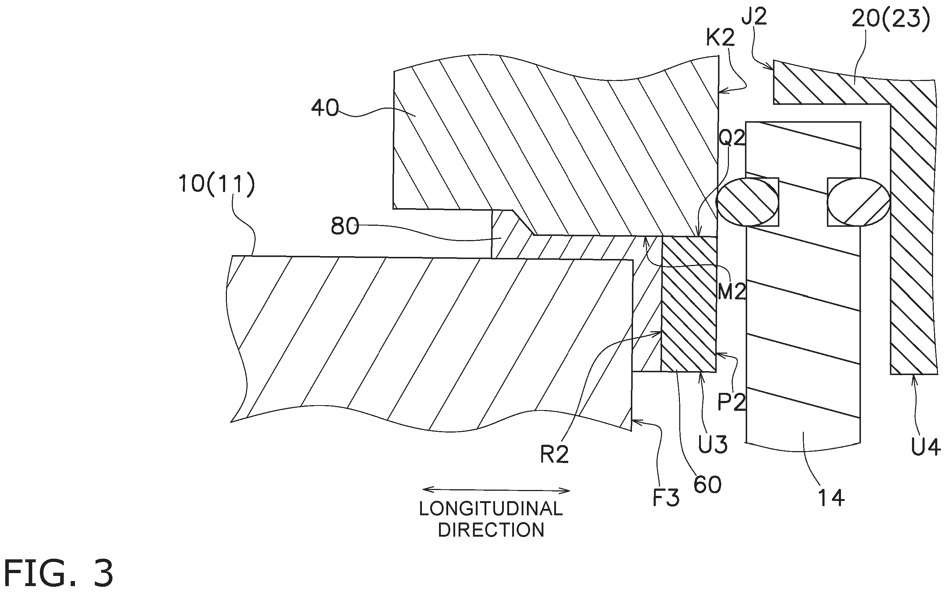

Here, FIG. 3 is a partial enlarged view of FIG. 1. As shown in FIG. 3, the second intermediate portion 60 has a facing surface P2, an abutting surface Q2, a joined surface R2, and an inner circumferential surface U3.

The facing surface P2 faces the housing 20. The facing surface P2 may abut against the facing surface J2 of the second end plate 23. In the present embodiment, the facing surface P2 is flush with the end surface K2 of the second flange 40, but a step may be formed between the facing surface P2 and the end surface K2. The abutting surface Q2 abuts against the second flange 40. The abutting surface Q2 abuts against the inner circumferential surface M2 of the second flange 40. The joined surface R2 is joined to the second joining material 80. In the present embodiment, the inner circumferential surface U3 is flush with the inner circumferential surface U4 of the second end plate 23, but the inner circumferential surface U3 does not necessarily have to be flush with the inner circumferential surface U4. In the present embodiment, the facing surface P2, the abutting surface Q2, and the joined surface R2 are planar surfaces, but at least one of these may be entirely or partially curved or bent.

### [First joining material 70]

The first joining material 70 is interposed between the first flange 30 and the reactor 10 and between the first intermediate portion 50 and the reactor 10. The first joining material 70 joins the first flange 30 to the reactor 10 and joins the first intermediate portion 50 to the reactor 10. The first joining material 70 is arranged in at least a portion of a gap between the first flange 30 and the reactor 10 and at least a portion of a gap between the first intermediate portion 50 and the reactor 10. As shown in FIG. 2, the first joining material 70 has an L-shaped cross section.

Note that a joined body constituted by the first flange 30 and the reactor 10 joined together by the first joining material 70 corresponds to a "separation membrane assembly" according to the present invention.

Crystallized glass, amorphous glass, a brazing material, ceramics, or the like can be used as the first joining material 70, and crystallized glass is particularly preferable in view of heat resistance and pressure resistance.

As the crystallized glass, it is possible to use SiO₂-B₂O₃-based, SiO₂-CaO-based, SiO₂-Al₂O₃-based, SiO₂-MgO-based, SiO₂-ZnO-BaO-based, SiO₂-B₂O₃-CaO-based, SiO₂-MgO-CaO-based, SiO₂-Al₂O₃-B₂O₃-based, or SiO₂-MgO-Al₂O₃-based crystallized glass, for example. Note that "crystallized glass" referred to in the present specification means glass in which a percentage of "the volume of a crystal phase" to the total volume (i.e., crystallinity) is 60% or more and a percentage of "the volume of an amorphous phase and impurities" to the whole volume is less than 40%.

### [Second joining material 80]

The second joining material 80 is interposed between the second flange 40 and the reactor 10 and between the second intermediate portion 60 and the reactor 10. The second joining material 80 joins the second flange 40 to the reactor 10 and joins the second intermediate portion 60 to the reactor 10. The second joining material 80 is arranged in at least a portion of a gap between the second flange 40 and the reactor 10 and at least a portion of a gap between the second intermediate portion 60 and the reactor 10. As shown in FIG. 3, the second joining material 80 has an L-shaped cross section.

Note that a joined body constituted by the second flange 40 and the reactor 10 joined together by the second joining material 80 corresponds to the "separation membrane assembly" according to the present invention.

Crystallized glass, amorphous glass, a brazing material, ceramics, or the like can be used as the second joining material 80, and crystallized glass is particularly preferable in view of heat resistance and pressure resistance.

### [Assembly of separation membrane module 1]

Steps for assembling the separation membrane module 1 include a step of producing a reactor assembly by joining the first and second flanges 30 and 40 and the first and second intermediate portions 50 and 60 to the reactor 10, and a step of housing the reactor assembly in the housing 20.

The step of producing a reactor assembly includes a first step of forming green bodies of the joining materials, a second step of attaching the flanges and the intermediate portions, and a third step of heating the green bodies of the joining materials. In the first step, a green body of the first joining material 70 is formed on the first end portion 10a of the reactor 10, and a green body of the second joining material 80 is formed on the second end portion 10b of the reactor 10. In the second step, the first flange 30 and the first intermediate portion 50 are attached in such a manner as to surround the green body of the first joining material 70, and the second flange 40 and the second intermediate portion 60 are attached in such a manner as to surround the green body of the second joining material 80. In the third step, the green bodies of the first and second joining materials 70 and 80 are heated to cause crystal growth or melting, and thereafter cooled to room temperature, and thus the first and second joining materials 70 and 80 are formed. Through the above steps, the reactor assembly in which the first and second flanges 30 and 40 and the first and second intermediate portions 50 and 60 are joined to the reactor 10 via the first and second joining materials 70 and 80 is completed.

Next, the step of housing the reactor assembly includes a fourth step of inserting the reactor assembly, a fifth step of attaching the elastic members, and a sixth step of connecting the end plates. In the fourth step, after the reactor assembly is inserted into the tube main body 21, positioning of both ends of the reactor assembly is performed. In the fifth step, the first through fourth elastic members 26a to 26d are fitted into the first through fourth recesses H1 to H4 in the tube main body 21. In the sixth step, the first end plate 22 is connected to the tube main body 21 with use of the fixing members 27, and the second end plate 23 is connected to the tube main body 21 with use of the fixing members 28. Thus, the separation membrane module 1 in which the reactor assembly is housed in the housing 20 is completed.

The first intermediate portion 50 is interposed between the reactor 10 and the first end plate 22, and therefore, the first end plate 22 can be kept from coming into direct contact with the reactor 10 in the sixth step. Accordingly, damage to the reactor 10 can be suppressed. Likewise, the second intermediate portion 60 is interposed between the reactor 10 and the second end plate 23, and therefore, the second end plate 23 can be kept from coming into direct contact with the reactor 10 in the sixth step. Accordingly, damage to the reactor 10 can be suppressed.

### (Variations of embodiment)

Although an embodiment of the present invention has been described, the present invention is not limited to the above embodiment, and various changes can be made within a scope not departing from the gist of the present invention.

### [Variation 1]

In the above embodiment, a case where the reactor 10 is used as the membrane structure is described, but a separation filter may also be used as the membrane structure. The separation filter has a configuration similar to that of the reactor 10, except that a separation membrane that allows permeation of a desired component contained in a fluid mixture is used instead of the separation membrane 12 that allows permeation of water vapor, and the separation filter does not include the catalyst 13. In the case where the separation filter is used as the membrane structure as well, use of the separation filter under high-temperature and high-pressure conditions is assumed in the present invention.

Note that in the case where the separation filter is used as the membrane structure, reaction heat is not generated and the need to control the temperature is low. Accordingly, a component that has passed through the separation membrane may be discharged from the sweep gas outlet T4 by making the pressure on the sweep gas outlet T4 side lower than the pressure on the sweep gas inlet T3 side.

### [Variation 2]

In the above embodiment, the tubular type reactor 10 is described as an example of the membrane structure, but it is also possible to use a monolith type reactor. Also, in the case where a separation filter is used as the membrane structure, either a tubular type separation filter or a monolith type separation filter may be used. The monolith type is a concept that encompasses a honeycomb type and means a shape that includes a plurality of cells extending through the membrane structure in the longitudinal direction.

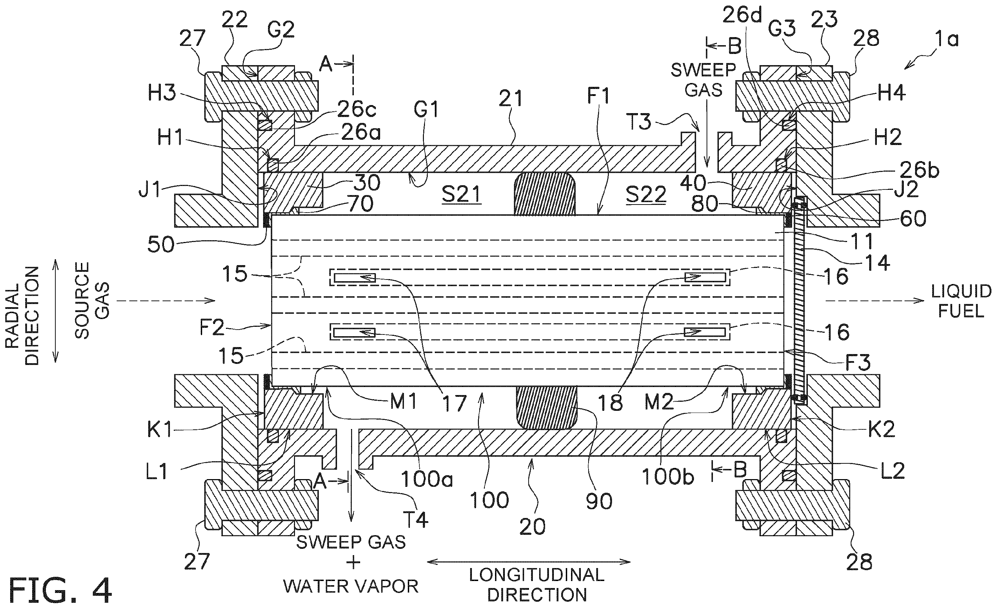

FIG. 4 is a schematic cross-sectional view showing a configuration of a separation membrane module 1a that includes a monolith type reactor 100. Note that only the reactor 100 is shown in a side view in FIG. 4.

The separation membrane module 1a is the same as the separation membrane module 1 according to the above embodiment, except that the separation membrane module 1a further includes a flow stopper 90, and includes the reactor 100 instead of the reactor 10. Note that the catalyst stopper 14 is optionally provided in the reactor 100 as well.

The flow stopper 90 is formed into an annular shape. The flow stopper 90 is arranged between the reactor 100 and the housing 20. The flow stopper 90 partitions the space between the reactor 100 and the housing 20 into a sweep gas discharge space S21 and a sweep gas supply space S22. The flow stopper 90 suppresses a direct flow of sweep gas between the sweep gas discharge space S21 and the sweep gas supply space S22. The flow stopper 90 is only required to be capable of suppressing a direct flow of sweep gas between these spaces, and need not serve as a seal between the reactor 100 and the housing 20. The flow stopper 90 can be made of expanded graphite, rubber, resin, metal, or the like.

The reactor 100 includes a plurality of first flow paths 15, a plurality of second flow paths 16, first slits 17, and second slits 18.

The first flow paths 15 extend through the reactor 100 in the longitudinal direction. The first flow paths 15 are open in the first and second end surfaces F2 and F3. The separation membrane 12 described above is formed on the inner surface of each first flow path 15. The inner side of the separation membrane 12 is the non-permeate-side space S1. The catalyst 13 described above is arranged in the non-permeate-side space S1.

The second flow paths 16 are provided inside the reactor 100. The second flow paths 16 extend in the longitudinal direction. The second flow paths 16 are closed at the first and second end surfaces F2 and F3.

The first slits 17 are formed in a first end portion 100a of the reactor 100. The first slits 17 extend through each second flow path 16 in the radial direction and are open in the outer circumferential surface F1. Accordingly, the first slits 17 communicate with each second flow path 16 and the sweep gas discharge space S21.

The second slits 18 are formed in a second end portion 100b of the reactor 100. The second slits 18 extend through each second flow path 16 in the radial direction and are open in the outer circumferential surface F1. Accordingly, the second slits 18 communicate with each second flow path 16 and the sweep gas supply space S22.

When the source gas is supplied to the first flow paths 15, the source gas is converted into the liquid fuel due to the action of the catalyst 13, and water vapor, which is a product of the conversion reaction, passes through the separation membrane 12 and flows into the second flow paths 16. Water vapor that has flowed into the second flow paths 16 is taken into sweep gas flowing into the second flow paths 16 from the sweep gas inlet T3 via the sweep gas supply space S22 and the second slits 18, and thereafter is discharged from the sweep gas outlet T4 to the outside via the first slits 17 and the sweep gas discharge space S21.

Note that, in this variation, the sweep gas inlet T3 and the sweep gas outlet T4 are provided on straight lines intersecting the axis of the reactor 10 in the cross-sectional view. With this configuration, the length of a flow path of the sweep gas in the sweep gas discharge space S21 and the length of a flow path of the sweep gas in the sweep gas supply space S22 can be made equivalent to each other, and accordingly, it is possible to suppress maldistribution of flows of the sweep gas. However, the positional relationship between the sweep gas inlet T3 and the sweep gas outlet T4 can be changed as appropriate.

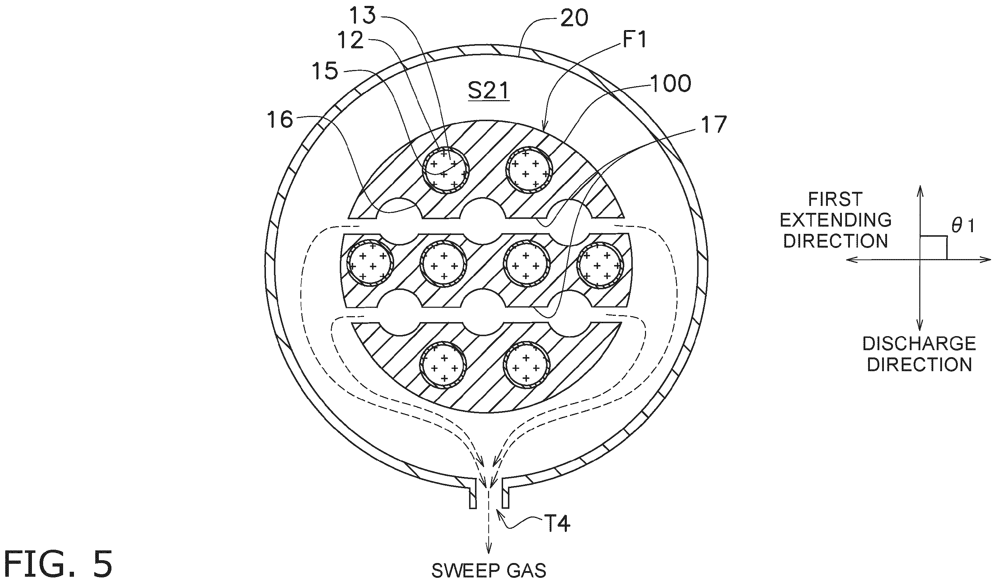

FIG. 5 is a cross-sectional view taken along a line A-A shown in FIG. 4. As shown in FIG. 5, the first slits 17 linearly extend through the inside of the reactor 100 and are open on both sides of the reactor 100. Each first slit 17 includes two openings formed in the outer circumferential surface F1. Sweep gas that has flowed out from the two openings of the first slit 17 to the sweep gas discharge space S21 passes through the sweep gas discharge space S21 and is discharged from the sweep gas outlet T4 to the outside.

Here, a first extending direction of each first slit 17 extending inside the reactor 100 is preferably inclined with respect to a discharge direction of the sweep gas discharged from the sweep gas outlet T4 to the outside, or the first extending direction is preferably orthogonal to the discharge direction. Specifically, an angle θ1 of the first extending direction relative to the discharge direction is preferably 45° or more and 135° or less. With this configuration, it is possible to suppress maldistribution of gas flows from the openings of the first slits 17 toward the sweep gas outlet T4, and accordingly, it is possible to suppress maldistribution of flows of sweep gas in the sweep gas discharge space S21.

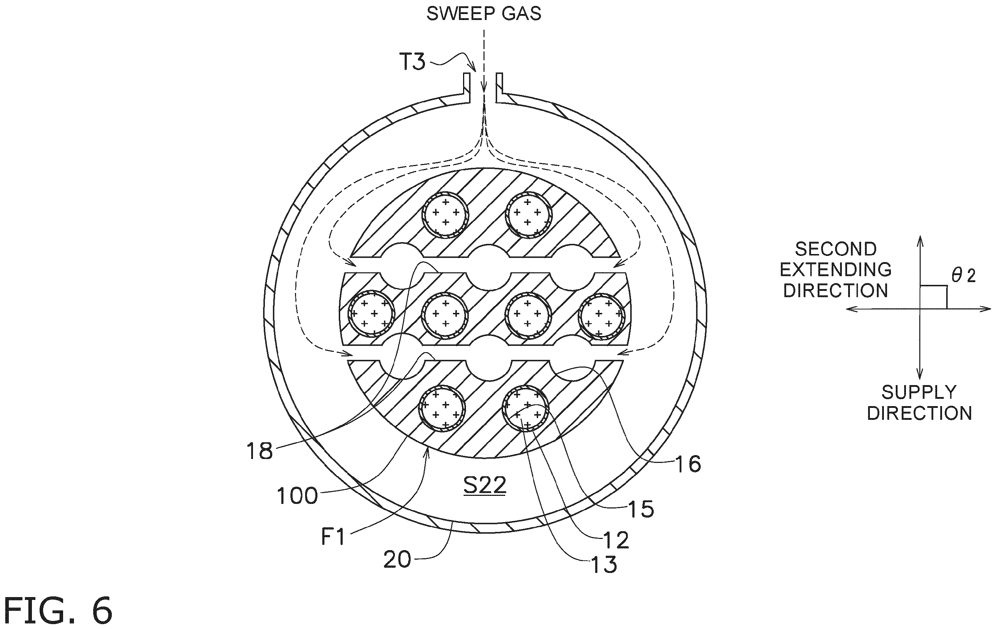

FIG. 6 is a cross-sectional view taken along a line B-B shown in FIG. 4. As shown in FIG. 6, the second slits 18 linearly extend through the inside of the reactor 100 and are open on both sides of the reactor 100. Each second slit 18 includes two openings formed in the outer circumferential surface F1. Sweep gas supplied from the sweep gas inlet T3 to the sweep gas supply space S22 passes through the sweep gas supply space S22 and flows into the two openings of the second slit 18.

Here, a second extending direction of each second slit 18 extending inside the reactor 100 is preferably inclined with respect to a supply direction of the sweep gas supplied from the sweep gas inlet T3 to the sweep gas supply space S22, or the second extending direction is preferably orthogonal to the supply direction. Specifically, an angle θ2 of the second extending direction relative to the supply direction is preferably 45° or more and 135° or less. With this configuration, it is possible to suppress maldistribution of gas flows from the sweep gas inlet T3 toward the openings of the second slits 18, and accordingly, it is possible to suppress maldistribution of flows of sweep gas in the sweep gas supply space S22.

### [Variation 3]

In the above embodiment, the separation membrane 12 is in contact with the catalyst 13, but a buffer layer may be interposed between the separation membrane 12 and the catalyst 13. The buffer layer physically separates the catalyst 13 from the separation membrane 12, and therefore, when the catalyst 13 has a high temperature due to reaction heat, it is possible to suppress formation of a crack in the separation membrane 12 from a point that is in contact with the catalyst 13. The buffer layer can be constituted by a ceramic material or an organic polymer material. Examples of ceramic materials that can be used include silica, alumina, and chromium oxide. Examples of organic polymer materials that can be used include PTFE, PVA, and PEG.

### [Variation 4]

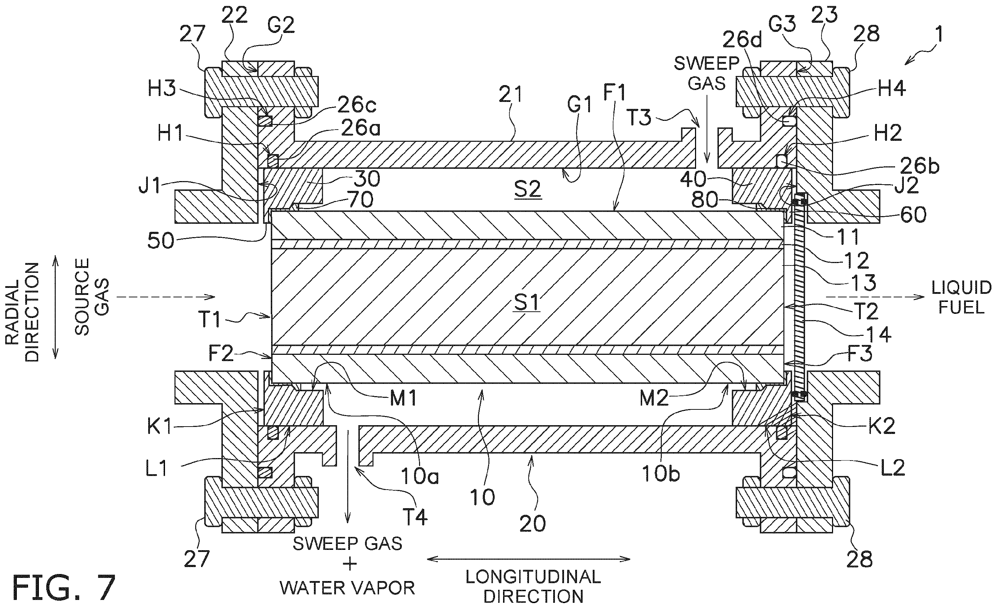

In the above embodiment, the first flange 30 is separate from the first intermediate portion 50, but the first flange 30 and the first intermediate portion 50 may also be formed as a single piece as shown in FIG. 7. In the case where the first flange 30 and the first intermediate portion 50 are formed as a single piece, handleability can be improved in the steps for assembling the separation membrane module 1.

Likewise, in the above embodiment, the second flange 40 is separate from the second intermediate portion 60, but the second flange 40 and the second intermediate portion 60 may also be formed as a single piece as shown in FIG. 7.

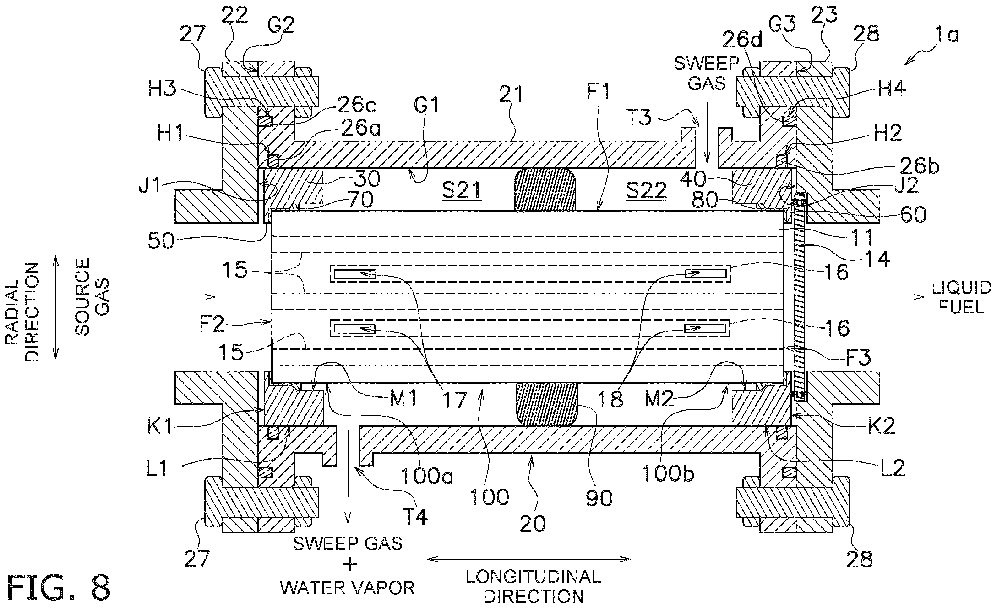

In the case where the monolith type membrane structure described above in Variation 2 is used as well, the first flange 30 and the first intermediate portion 50 may be formed as a single piece and the second flange 40 and the second intermediate portion 60 may be formed as a single piece as shown in FIG. 8.

### [Variation 5]

In the above embodiment, the first intermediate portion 50 is arranged in the entire gap between the reactor 10 and the first end plate 22, but a configuration is also possible in which the first intermediate portion 50 is arranged only in a portion of the gap. In this case, it is possible to use, as the first intermediate portion 50, a C-shaped thin plate member or a plurality of thin plate members arranged so as to be spaced apart from each other in the circumferential direction, for example.

Likewise, in the above embodiment, the second intermediate portion 60 is arranged in the entire gap between the reactor 10 and the second end plate 23, but a configuration is also possible in which the second intermediate portion 60 is arranged only in a portion of the gap.

### [Variation 6]

In the above embodiment, the first joining material 70 is interposed between the first flange 30 and the reactor 10 and between the first intermediate portion 50 and the reactor 10, but a configuration is also possible in which the first joining material 70 is not interposed between the first intermediate portion 50 and the reactor 10. In this case, the first intermediate portion 50 may be in direct contact with the reactor 10.

Likewise, in the above embodiment, the second joining material 80 is interposed between the second flange 40 and the reactor 10 and between the second intermediate portion 60 and the reactor 10, but a configuration is also possible in which the second joining material 80 is not interposed between the second intermediate portion 60 and the reactor 10. In this case, the second intermediate portion 60 may be in direct contact with the reactor 10.

### [Variation 7]

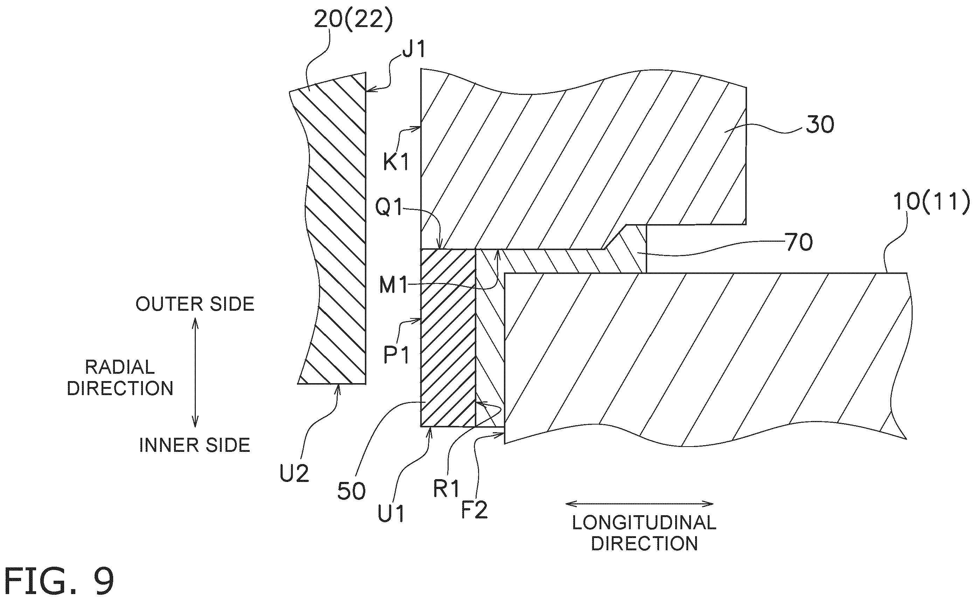

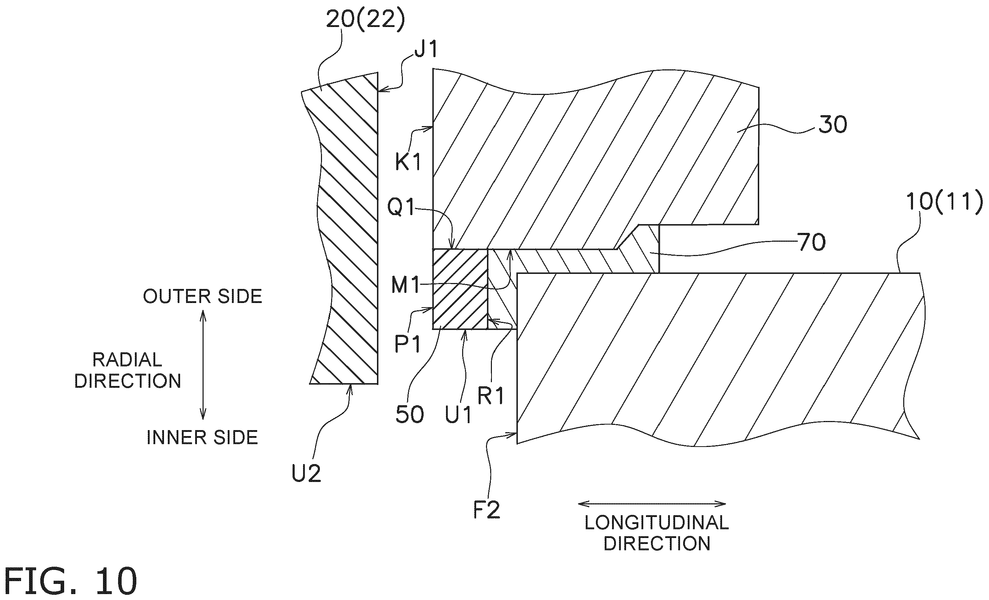

In the above embodiment, the inner circumferential surface U1 of the first intermediate portion 50 is flush with the inner circumferential surface U2 of the first end plate 22 as shown in FIG. 2, but there is no limitation to this configuration. As shown in FIG. 9, the inner circumferential surface U1 of the first intermediate portion 50 may be located radially inward of the inner circumferential surface U2 of the first end plate 22. Alternatively, as shown in FIG. 10, the inner circumferential surface U1 of the first intermediate portion 50 may be located radially outward of the inner circumferential surface U2 of the first end plate 22.

Likewise, in the above embodiment, the inner circumferential surface U3 of the second intermediate portion 60 is flush with the inner circumferential surface U4 of the second end plate 23 as shown in FIG. 3, but there is no limitation to this configuration. The inner circumferential surface U3 of the second intermediate portion 60 may be located radially inward or outward of the inner circumferential surface U4 of the second end plate 23, although these configurations are not illustrated.

### [Variation 8]

In the above embodiment, the separation membrane 12 allows permeation of water vapor, which is a product of the conversion reaction for converting the source gas into the liquid fuel, but there is no limitation to this configuration. The separation membrane 12 may allow permeation of the liquid fuel, which is a product generated through the conversion reaction for converting the source gas into the liquid fuel. In this case as well, the reaction equilibrium of the above formula (1) can be shifted to the product side.

Also, in the case where the separation membrane 12 allows permeation of the liquid fuel, the reaction equilibrium can be shifted to the product side even when the liquid fuel is generated through a reaction in which no water vapor is generated as a by-product (e.g., H₂+CO ⇔ CH₃OH).

### [Variation 9]

In the separation membrane module 1 (see FIG. 1) according to the above embodiment, the sweep gas inlet T3 and the sweep gas outlet T4 are diagonally opposite to each other in a side view, and sweep gas flows from the sweep gas inlet T3 toward the sweep gas outlet T4, but there is no limitation to this configuration.

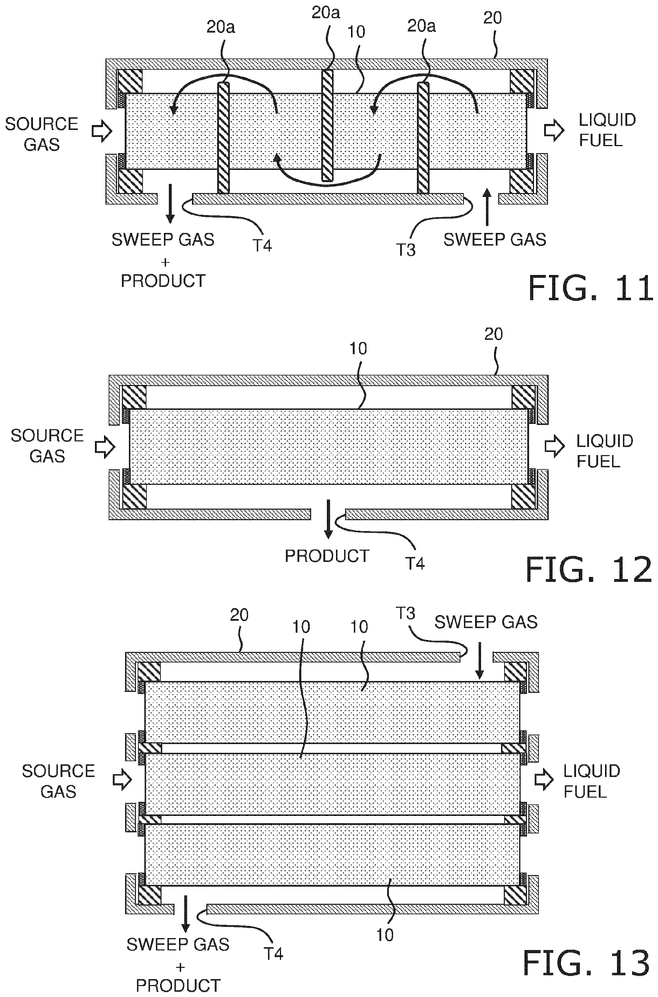

For example, as shown in FIG. 11, the sweep gas inlet T3 and the sweep gas outlet T4 may be provided on the same side of the reactor 10 in a side view, and flow regulation plates 20a that partially block the space between the reactor 10 and the housing 20 may be provided. Three flow regulation plates 20a are provided in the example shown in FIG. 11, but the number of flow regulation plates 20a may be one, two, or four or more. Positions of the flow regulation plates 20a can be suitably set.

As shown in FIG. 12, a configuration is also possible in which the housing 20 does not have the sweep gas inlet T3, and sweep gas is not supplied into the housing 20. In this case, a product separated by the separation membrane 12 of the reactor 10 flows out from the sweep gas outlet T4 to the outside of the housing 20. The position of the sweep gas outlet T4 can be suitably set.

Note that the configurations shown in FIGS. 11 and 12 are also applicable to the case where a separation filter is used as the membrane structure instead of the reactor 10.

### [Variation 10]

In the separation membrane module 1 (see FIG. 1) according to the above embodiment, only one reactor 10 is housed in the housing 20, but there is no limitation to this configuration.

For example, a plurality of reactors 10 may be housed in the housing 20 as shown in FIG. 13.

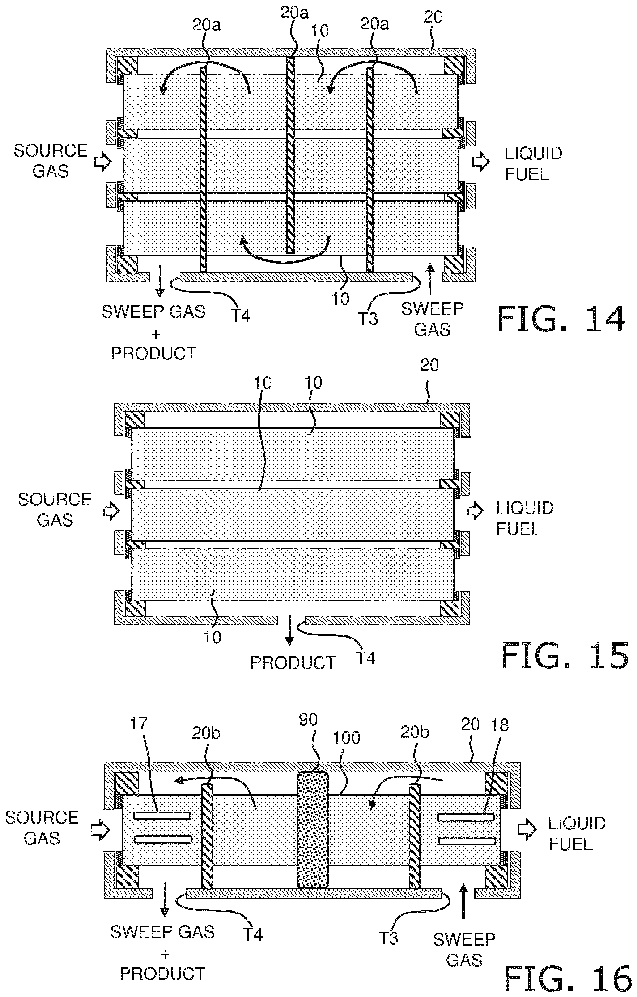

Also, flow regulation plates 20a that partially block the space between the reactors 10 and the housing 20 may be provided as shown in FIG. 14. Three flow regulation plates 20a are provided in the example shown in FIG. 14, but the number of flow regulation plates 20a may be one, two, or four or more. Positions of the flow regulation plates 20a can be suitably set. Note that the sweep gas inlet T3 and the sweep gas outlet T4 may be provided on the same side of the reactors 10 in a side view as shown in FIG. 14.

As shown in FIG. 15, a configuration is also possible in which the housing 20 does not have the sweep gas inlet T3, and sweep gas is not supplied into the housing 20. In this case, a product separated by the separation membrane 12 of the reactors 10 flows out from the sweep gas outlet T4 to the outside of the housing 20. The position of the sweep gas outlet T4 can be suitably set.

Note that the configurations shown in FIGS. 13 to 15 are also applicable to a case where separation filters are used as the membrane structures instead of the reactors 10.

### [Variation 11]

In the separation membrane module 1a (see FIG. 4) according to Variation 2 described above, the sweep gas inlet T3 and the sweep gas outlet T4 are diagonally opposite to each other in a side view, but there is no limitation to this configuration.

For example, as shown in FIG. 16, the sweep gas inlet T3 and the sweep gas outlet T4 may be provided on the same side of the reactor 100 in a side view, and flow regulation plates 20b that partially block the space between the reactor 100 and the housing 20 may be provided. In the example shown in FIG. 16, a flow regulation plate 20b is provided on each side of the flow stopper 90. The sweep gas inlet T3-side flow regulation plate 20b divides the sweep gas inlet T3-side space into a space in which sweep gas mainly flows into the second slits 18 in the reactor 100 and a space in which sweep gas flows into the reactor 100 from its side surface. The sweep gas outlet T4-side flow regulation plate 20b divides the sweep gas outlet T4-side space into a space in which sweep gas mainly flows out from the first slits 17 in the reactor 100 and a space in which sweep gas flows out from the side surface of the reactor 100. However, the number and positions of flow regulation plates 20b can be suitably set. Also, a portion of sweep gas may pass through the flow stopper 90.

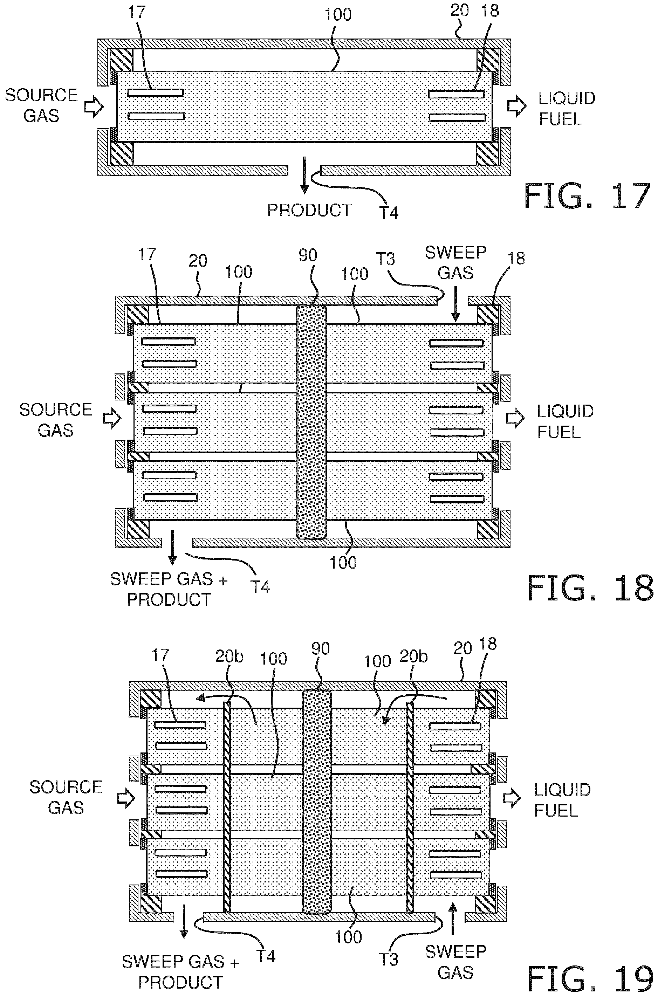

As shown in FIG. 17, a configuration is also possible in which the housing 20 does not have the sweep gas inlet T3, and sweep gas is not supplied into the housing 20. In this case, a product separated by the separation membrane 12 of the reactor 100 flows out from the sweep gas outlet T4 to the outside of the housing 20. The position of the sweep gas outlet T4 can be suitably set.

Note that the configurations shown in FIGS. 16 and 17 are also applicable to a case where a separation filter is used as the membrane structure instead of the reactor 100.

### [Variation 12]

In the separation membrane module 1a (see FIG. 4) according to Variation 2 described above, only one reactor 100 is housed in the housing 20, but there is no limitation to this configuration.

For example, a plurality of reactors 100 may be housed in the housing 20 as shown in FIG. 18.

Also, flow regulation plates 20b that partially block the space between the reactors 100 and the housing 20 may be provided as shown in FIG. 19. In the example shown in FIG. 19, a flow regulation plate 20b is provided on each side of the flow stopper 90. The sweep gas inlet T3-side flow regulation plate 20b divides the sweep gas inlet T3-side space into a space in which sweep gas mainly flows into the second slits 18 in the reactors 100 and a space in which sweep gas flows into the reactors 100 from their side surfaces. The sweep gas outlet T4-side flow regulation plate 20b divides the sweep gas outlet T4-side space into a space in which sweep gas mainly flows out from the first slits 17 in the reactors 100 and a space in which sweep gas flows out from the side surfaces of the reactors 100. However, the number and positions of flow regulation plates 20b can be suitably set. Also, a portion of sweep gas may pass through the flow stopper 90. Note that the sweep gas inlet T3 and the sweep gas outlet T4 may be provided on the same side of the reactors 100 in a side view as shown in FIG. 19.

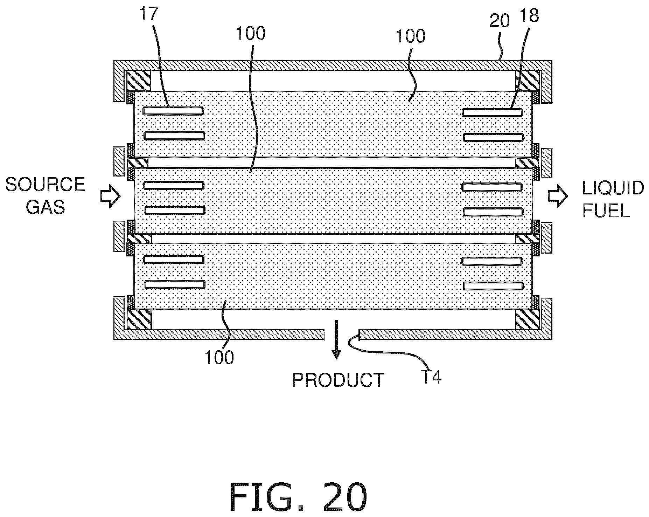

As shown in FIG. 20, a configuration is also possible in which the housing 20 does not have the sweep gas inlet T3, and sweep gas is not supplied into the housing 20. In this case, a product separated by the separation membrane 12 of the reactors 100 flows out from the sweep gas outlet T4 to the outside of the housing 20. The position of the sweep gas outlet T4 can be suitably set.

Note that the configurations shown in FIGS. 18 to 20 are also applicable to a case where separation filters are used as the membrane structures instead of the reactors 100.

### REFERENCE SIGNS LIST

- 1: Separation membrane module
- 10: Reactor
- 10a: First end portion
- 10b: Second end portion
- F1: Outer circumferential surface
- F2: First end surface
- F3: Second end surface
- 20: Housing
- 21: Tube main body
- 22: First end plate
- 23: Second end plate
- 30: First flange
- 40: Second flange
- 50: First intermediate portion
- 60: Second intermediate portion
- 70: First joining material
- 80: Second joining material

## Claims

1. A separation membrane module comprising:
a tubular housing;
a columnar membrane structure housed in the housing;
an annular first flange surrounding a first end portion of the membrane structure; and
a first intermediate portion arranged between a first end surface of the membrane structure and the housing.

2. The separation membrane module according to claim 1, further comprising:
a first joining material interposed between the first flange and the membrane structure and between the first intermediate portion and the membrane structure.

3. The separation membrane module according to claim 1, wherein
the first intermediate portion and the first flange are formed as a single piece.

4. The separation membrane module according to claim 1, wherein
the first intermediate portion and the first flange are each constituted by a ceramic material.

5. The separation membrane module according to claim 1, further comprising:
an annular second flange surrounding a second end portion of the membrane structure; and
a second intermediate portion arranged between a second end surface of the membrane structure and the housing.

6. The separation membrane module according to claim 5, further comprising:
a second joining material interposed between the second flange and the membrane structure and between the second intermediate portion and the membrane structure.

7. The separation membrane module according to claim 5, wherein
the second intermediate portion and the second flange are formed as a single piece.

8. The separation membrane module according to claim 5, wherein
the second intermediate portion and the second flange are each constituted by a ceramic material.

9. The separation membrane module according to claim 1, wherein
the membrane structure is a reactor.

10. The separation membrane module according to claim 1, wherein
the membrane structure is a separation filter.
